# EUROPEAN PATENT SPECIFICATION

(11) **EP 1 374 486 B1**
(45) Date of publication and mention of the grant of the patent: **05.11.2008**
(21) Application number: 01929480.0
(22) Date of filing: 30.03.2001
(51) Int. Cl.: H04L 12/24

(54) **METHOD FOR CONFIGURING A NETWORK BY DEFINING CLUSTERS**
METHODE ZUR KONFIGURATION EINES NETWERKES DURCH DEFINIEREN VON CLUSTERN
PROCEDE DE CONFIGURATION D'UN RESEAU PAR LA DEFINITION DE GROUPES

(43) Date of publication of application: 02.01.2004
(73) Proprietor: Nokia Corporation, 02150 Espoo (FI)
(72) Inventor: LAIHO, Jaana, FIN-02880 Veikkola (FI); HÖGLUND, Albert, FIN-00330 Helsinki (FI); RAIVIO, Kimmo, FIN-01280 Vantaa (FI); HENRIKSSON, Jukka, FIN-02140 Espoo (FI); HÄTÖNEN, Kimmo, FIN-00650 Helsinki (FI); HÄMÄLÄINEN, Ari, FIN-01280 Vantaa (FI); SIMULA, Olli, FIN-02180 Espoo (FI)
(74) Representative: TBK-Patent
(86) International application number: PCT/EP2001/003660
(87) International publication number: WO 2002/080458

(56) References cited:
- EP-A- 0 918 411
- EP-A- 0 973 296
- US-A- 5 797 128
- US-A- 5 872 928

## Description

### Field of the invention

The present invention relates to method and a system for network configuration and in particular network optimisation.

### BACKGROUND OF THE INVENTION

The third generation cellular systems will offer services well beyond the capabilities of today's networks. The variety of services requires the whole radio network planning and optimisation planning process to overcome a set of modifications. One of the modifications is related to the quality of service (QoS) requirements and control. So far it has been adequate to provide the speech services with continuous coverage and with acceptable blocking probability. In the case of UMTS the problem is more multidimensional. For each service the QoS targets have to be set and naturally also met. With configuration parameters, an optimum operation point for each cell should be found.

Configuration parameters control the radio resource management, i.e., algorithms related to power control, congestion control, handover control etc. Currently there are hundreds of configuration parameters (independent of the multiple access method) which control the quality and capacity of the Radio Access Network (RAN). It is easy to understand that finding optimum set of parameters for each cell manually is impossible task when the number of cells can be up to 10000. Furthermore, often the operator efforts are concentrating on the trouble shooting work rather than maximising the utilisation rate of the RAN.

The additional complication to the optimisation process arises from the fact that the network is optimised based on network measurements. Currently there are more than 1000 possible measurements in a WCDMA (Wideband Code Divisional Multiplex Access). RAN (Radio Access Network) Considering networks of thousands of cells it is clear that for optimum handling of the RAN effective cell clustering methods are required.

Compared to phenomenons in second generation network the nature of processes in the networks using packets is much more challenging. The processes in low level are impossible to predict and their time frame is much faster. Therefore operators will need to inspect network measurements with much finer granularity. The data packets will come in bursts. Thus there can be, for example, problems that are caused by simultaneous bursts of packets implementing different services. These bursts can last some hundreds of milliseconds. Previously it was enough to inspect counters collected over minutes while in the third generation networks one second can be very long time.

For an operator to provide the maximum capacity (with required quality) supporting multiple traffic mixes more advanced analysis methods are required to support the configuration parameter settings.

Document EP0973296 reveals a system facilitating control over a group of network elements. It describes the communication with a plurality of network elements by translation of a policy into lower level device commands.

Document US5872928 describes a method and a configuration device as defined in the preambles of claims 1 and 17, respectively. The usage of such a method still requires a lot of operation load on the operator when configuring large and complex networks, since the operator has to know which parameters can be grouped together and which not and what are the limit values of each variable.

### SUMMARY OF THE INVENTION

Therefore, the object underlying the invention resides in providing a method and a system for configuring a network, by which the amount of configuration data can be reduced.

This object is solved by a method for configuring a network, wherein the network comprises a plurality of network sections, the method comprising the steps of accessing data from network sections; forming groups of network sections using a neural clustering method by using at least part of the accessed data as input data; and adjusting parameters of all network sections in one group in common.

Alternatively, this object is solved by a network configuration system which is adapted to configure a network comprising a plurality of network sections, comprising a configuration device which is adapted to have access to data in the network section, to form groups of network sections according to a clustering method by using at least part of the accessed data as input data and to adjust parameters of all network sections in one group in common.

Thus, according to the invention, the network sections are clustered (grouped). Hence, parameters of a whole group of network sections are adjusted, instead of adjusting parameters of each cell individually. In this way, the amount of configuration data can be reduced.

This is in particular effective in optimising the network, during which the configuration of the network is changed repeatedly in order to find an optimal configuration.

Thus, according to the invention effective means to monitor and classify network sections (e.g., cells) and to identify problem areas in the network are provided. It is not necessary that the operators have to use the initial configuration parameters or adjust the values for the configuration parameters cell by cell. Hence, the network performance and quality will be improved.

Moreover, the costs for configuring and maintaining the network can be strongly reduced.

The optimisation/automation process (and thus result of it) is greatly improved, leading to an improved quality/capacity.

The clustering method may be a Self Organizing Map (SOM) algorithm. Namely, the Self-Organising Map (SOM) is an efficient tool for visualisation and clustering of multidimensional data. It transforms the input vectors on a two-dimensional grid of prototype vectors and orders them. The ordered prototype vectors are easier to visualise and explore than the original data.

Alternatively, the clustering method may be a K-means algorithm.

A vector is defined having as element one or more variables of a particular network section. That is, a one-cell model is established. By this measure, misbehaving cells can be searched, for example.

The state of a particular network section may be obtained by determining the best-matching unit (BMU) of data vectors of the network sections. That is, the best matching unit (BMU) or "winner neuron" is searched by comparing the input vector with the prototype vectors.

In addition, a sequence of states may be obtained, and a histogram may be formed, wherein network sections having similar histograms are classified to same clusters. In this way, the network sections may be clustered (grouped) according to their behaviour. That is, network sections showing the same behaviour are associated to same groups.

A vector may be defined which comprises as elements a particular variable of a plurality of network sections. That is, the input vector for the clustering method consists of a particular parameter of each network section. That is, the network sections may be grouped according to certain performance indicators, for example.

A plurality of component planes may be formed each based on one vector. By this measure, the influence of each variable (i.e., parameter) of each cell on the network may be observed.

A covariance matrix of the plurality of component planes may be determined. By this measure, correlations between network sections may be observed.

Clusters are identified by using Unified distance matrix algorithm. Alternatively, the clusters may be identified by using Davies-Bouldin index algorithm, which is more complex, but also more accurate.

The best matching unit (BMU) may be determined by using an Euclidian distance, or by using an Kullback-Leibler distance. However, any suitable distance measure method is applicable.

The network sections may be single network elements. It is noted that in the above context a network section is to be understood as a part of the network, i.e., a network section may be a cell in a mobile network, a base station, a network control element, or mobile phone or the like. Furthermore, a network section may also be a group of network elements of the same type or of a different type.

The network may be a cellular network and the network sections may be cells.

The network sections may be grouped based on quality measurements, or alternatively, based on traffic profiles in the network sections, or performance measurements. Also other suitable criterions are possible.

### BRIEF DESCRIPTION OF THE DRAWINGS

The present invention will be more readily understood with reference to the accompanying drawings in which:
Fig. 1 shows a flow chart of the basic optimising process according to the embodiments,
Fig. 2 shows an analysis result of multiple cells according to the second embodiment,
Fig. 3 shows cells of a radio network placed to a cluster/group that best represents the cell in question according to the second embodiment,
Fig. 4 shows clustering information on the physical map according to the second embodiment, and
Fig. 5 shows a network optimising system according to a third embodiment.

### DETAILED DESCRIPTION OF PREFERRED EMBODIMENTS

In the following, preferred embodiments of the invention is described in more detail with reference to the accompanying drawings.

According to the invention, the optimisation, i.e., optimal parameter setting of a whole network consisting of a plurality of cells is simplified by grouping the cells into several groups of similar cells. For this grouping, a so-called clustering method is used. A cluster is a collection of data objects that are similar to one another.

This feature of grouping or clustering the cells makes it much easier for the operator to optimise the cell-specific parameters. The cells can be clustered (grouped) based on traffic profile and density, propagation conditions, cell types, performance indicators and quality measurements etc. Grouping based on multiple criteria instead of just one (like cell type) is more accurate and the operation of the network will benefit from this.

In the following, it is described how a clustering method as the so-called SOM (self-organising map) can be utilised in the cell clustering process and furthermore in the capacity and quality of service analysis and optimisation process of WCDMA network. It is noted that further information about the SOM can be found in Teuvo Kohonen: "Self-Organizing Maps", Springer-Verlag, Berlin, 1995. Briefly, the SOM algorithm is an unsupervised algorithm, by which high-dimensional data sets can be visualised on a two-dimensional regular grid of neurons. By the clusters constructed by the SOM algorithm, insights into the structure of the given data set are provided. SOM is a heuristic technique delivering an exact assignment of objects to clusters.

It is noted that the SOM algorithm is only an example for a clustering method, and also any other suitable clustering method, e.g. K-means, may be used instead.

Mobile networks produce a huge amount of spatio-temporal data. The data consists of counters and performance indicators of base stations and quality information of calls. In the following, two possible ways to start the analysis are described.

Firstly, a general one-cell model can be built which is trained using one cell state vectors from all cells. Secondly, a model of the network using state vectors with indicators from all cells in a mobile network can be built.

In both processes further analysis is needed. In the first process, it can be compared how well the general model represents each cell and in the second process, the distributions of parameters/measurements of one cell can be compared with the others.

The first process can be utilised when behaviour of a cell is monitored at each time step using some predetermined performance indicators or other variables describing the individual cell. Furthermore, the process can be used in troubleshooting cases when looking for misbehaving cells. Clustering variables could be, for example, describing the interference situation in the cell, hand over conditions and call statistics. In the following table, the variables for each cell are illustrated. Here, a simple illustration of what is the type of vector in question used for the cell clustering (grouping) by using italic for the elements of the vector. That is, the vector comprises the variables (ie., variable 1 and variable 2) of one cell (i.e., Cell 1).

| CELL1 | CELL2 |
|---|---|
| *Variable 1* | Variable 1 |
| *Variable* 2 | Variable 2 |

The second process can be used, for example, when grouping cells according to temporal dependencies and correlations between cells with respect to certain performance indicators and variables. Normally, this analysis is calculated from a sequence of the performance indicators and variables. The following table gives a simple illustration of what is the type of vector in question used for the cell clustering (grouping), namely, the elements of this vector are printed using italic. That is, the vector in the second process consists of variable 1 and observation 1 of all cells.

| CELL1 | CELL2 |
|---|---|
| *Variable 1, observation 1* | *Variable 1, observation 1* |
| Variable 1, observation 2 | Variable 1, observation 2 |

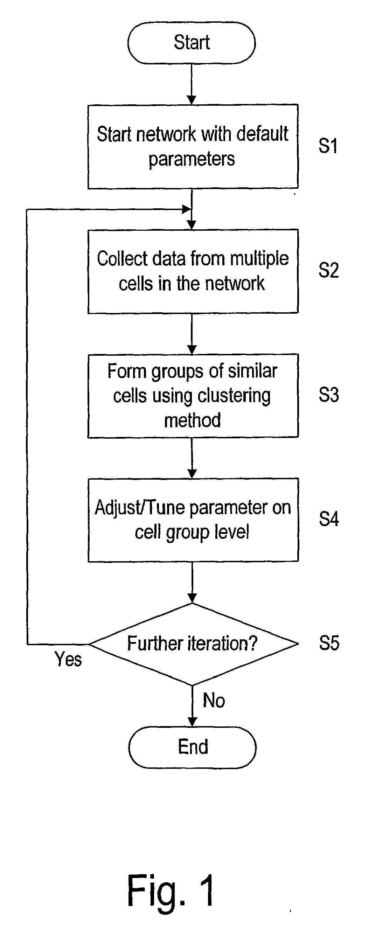

Fig. 1 shows a simplified overview of the main steps in the basic procedure for optimising the network

First, in step S1, the network is started with default parameter settings. After the network has been operational in this sub-optimal mode, measurements from the cells are collected in step S2.

In step S3, each cell is automatically assigned to a cluster, the number of clusters being well under the number of cells in the network. This clustering method may be a self-organised map (SOM) or another clustering method.

Each cell in a group thus formed uses the same configuration parameter values. Thus, in step S4 the parameters are adjusted/tuned on cell group level.

The process may be repeated, as indicated in step S5. That is, in case a further iteration is regarded to be necessary, the process returns to step S2, wherein new data based on the new parameter settings are collected. Thereafter, in step S3, new groups are formed using the clustering method, and in step S4 new parameters are set.

In case no further iteration is necessary (i.e., a sufficient setting of the parameters or a sufficient performance of the network as a whole has been achieved), the process is ended after step S5.

Each cell in a cell-group will use same configuration parameter values and the optimisation process is greatly simplified, improved and made more efficient. Instead of getting the network "just to work", the utilisation rate can increase dramatically.

In the optimisation phase for optimising the network, it is concentrated on the optimisation/automation of cell group "owning" a parameter set, rather than optimising each individual cell with its own selection of configuration parameter settings. That is, parameters of a whole cell group are changed in the same way, instead changing parameters individually for each cell. In this way, also the possibility of error in the parameter settings is reduced. This is because an erroneous setting of a parameter for a whole group immediately leads to detectable wrong results, whereas one single cell having erroneously set parameters does not necessarily affect measurements to an easily detectable extent.

The cell clusters can be utilised also to optimise only sub-set of the configuration parameters.

In a trouble shooting case in which during normal operation failures of the network have to be found and removed, the problematic cells can be found rapidly using some clustering method and visualisation of the clusters. The SOM is an efficient tool for both clustering and visualisation of the data. Additionally using these visualisation properties, the operator can easily analyse what kind of cell types he has in his network with respect to certain performance indicators and variables and combine the results with geographical relationships.

As described above, the Self Organizing Map (SOM) algorithm is able to perform both data clustering and visualisation. The benefit of using SOM is in visualisation of interesting parts of data. The algorithm moves the nodes of the map towards the areas of higher density of mapped input vectors. The SOM is efficient in visualisation the clusters. However, the same tasks can be performed using any pairs of clustering and vector projection methods. In the following, the use of SOM for both these Larks is described.

In the following, a first embodiment is described in which cell classification using cluster histograms is performed. In particular, according to the first embodiment, the above-described first process is used.

A general SOH model of one cell can be built using samples from all the cells to be analysed. The model is built using a fixed set of variables. The length of input vector is sate as the number of used variables. The model is an average of all used cells.

Clusters can be found using U-matrix presentation or hierarchical clustering of SOM node vectors. The U-matrix (Unified distance matrix method) allows to visualise the structure of the input space of an SOM. A more detailed description of the U-matrix presentation can be found in A. Ultsch and H.P. Simon: "Kohonen's self organizing feature maps for exploratory data analysis" in Proceedings of the International Neural Network Converence, pages 304-308, Dordrecht, Netherlands, 1990.

When hierarchical clustering to SOM node vectors is used, the number of clusters has to be fixed. This can be done manually on basis of U-matrix presentation or a more sophisticated method like Davies-Bouldin index can be used. The Davies-Bouldin index is described in David L. Davies and Donald W. Bouldin: "A cluster separation measure", IEEE Transactions on Pattern Analysis and Machine Intelligence, 1(2): pages 224-227, April 1979.

Hierarchical clustering of SOM node vectors has been considered in Juha Vesanto and Esa Alhoniemi: "Clustering of the Self-Organizing Map", IEEE Transactions on Neural Networks, Volume 11(3), pages 586-600, May 2000.

The best-matching units (BMU) of data vectors give the state or class of the cell. Stated in other words, the BMU gives the node of the SOM that is the closest when compared to the input data vector. From a sequence of states the class frequencies of cells can be computed.

That is, for each cell a histogram is obtained which represents the change of its state over a period of time.

Using these distributions as data to a second level SOM, a SOM of histograms is obtained. The topology of the new SOM is a two-dimensional rectangular grid with nodes about two times the amount of cells.

The BMU search of the map can preferably be based on Kullback-Leibler distance instead of the usual Euclidean distance. The Kullback-Leibler distance is described in detail in S. Haykin: "Neural Networks, a Comprehensive Foundation", Macmillan, 1999. Stated briefly, the Kullback-Leibler distance is a directed or orientated distance between two models or distributions and, thus, gives a more accurate indication of the difference.

The clusters of second level SOM and the BMUs for cells can be found. Cells with similar histograms are classified to same clusters. For example, cells within a town centres, in particular business centres, having a similar load distribution and history (i.e., large traffic during the normal working hours, less traffic in the evening) will be associated to one group due to their similar histograms.

The shifts of locations of cells on second level SOM can be visualised using old clusters of the first level SOM to label new data and compute new histograms.

The process described above classifies cells using cluster histograms as models of cell behaviour. The histograms describe how much a particular cell differs from a general cell model, which has been built using as much as representative data as possible.

It is noted that the data may also be collected at different times, or may contain data over certain interesting time periods or there is a large number of time periods. In this case, the above-described second stage of the clustering (e.g. histograms) is not needed. In this case, the following vector model may be used to group cells, where c stands for cell, t for time and v for variable:
Vector1: c1_v1_t1, c1_v1_t2, c1_v2_t1, c1_v2_t2
Vector2: c2_v1_t1, c2_v1_t2, c2_v2_t1, c2_v2_t2
Vector3: c3_v1_t1, c3_v1_t2, c3_v2_t1, c3_v2_t2
etc.

Next, a second embodiment is described in which cell classification using correlations is performed. According to the second embodiment, the above-described second process (i.e., a vector comprising as elements a particular parameter of each cell of interest) is used.

In this process, SOMs of one variable will be built. One variable of each cell is analysed with the corresponding ones of the other cells. Thus, the length of SOM input vector is the number of cells of interest. That is, if for example a network consisting of 32 cells is to investigated, the SOM input vector comprises 32 elements. The data to be analysed has been normalised to zero mean and unit variance as one data vector over all the cells.

In the visualisation, there is one component plane per each cell, since, as mentioned above, the length of the vector is the number of cells. Thus, the parameters of mobile network state at one moment can be read from similar locations on component planes.

For example, the upper left corner gives one possible combination of values of the analysed variable like the error rate. The planes are preferably visualised using a common colour axis. This makes it possible to see the real values of the variable, but it also hides the smaller variations inside the cells.

If, for example, it has to be found out which cells have similar frame error rate (FER) distribution, the task of human analyser can be made easier by further processing the component planes of the SOM. Namely, one vector is defined which comprises as elements the frame error rate (FER) of each cell. The corresponding component plane of the SOM gives the FER distribution. This kind of post-processing is more important if the number of component planes is higher. In real implementations, a high number of component planes is very likely.

The component planes are considered as separate figures. The covariance matrix of the figures is computed from the vector of figure dot or node values. The length of figure vector is a product of the two dimensions of the map. The covariance matrix is a square matrix of the same size as the number of analysed cells.

The covariance matrix of the planes is the new data, which will be used on later studies. This data has one row for each cell. A new second level SOM is trained using the covariance matrix. The topology of the new SOM can be a two-dimensional rectangular grid with nodes about two times the amount of cells. The covariance matrix row of each cell is mapped on the second level SOM, and the best-matching map node for each cell is found. The map nodes are labelled using cell names.

The second level SOM can be visualised using the labels or the corresponding first level SOM component planes. In the latter case the SOM component planes are reorganised so that the similar ones locate near each other. This makes it easier to find correlations between SOM components.

If component planes of first level SOM are used for visualisation, the BMU search can be run iteratively so that only one cell matches to each second level SOM node. If this is not done, the visualisation of SOM with more than one figure per node will take a lot of space. In the iterative BMU search, if a cell is mapped on the same node as some other cells, the cell, which has the largest classification error, will be moved to the second nearest node. This will be repeated as long as there is no more than one cell per each node.

The SOM planes reorganisation method has been discussed earlier in Juha Vesanto: "SOM-based data visualization methods", Intelligent Data Analysis, 3(2):111--126, 1999, and Juha Vesanto and Jussi Ahola: "Hunting for Correlations in Data Using the Self-Organizing Map", in H. Bothe, E. Oja, E. Massad, and C. Haefke, editors, Proceeding of the International ICSC Congress on Computational Intelligence Methods and Applications (CIMA '99) , pages 279-285. ICSC Academic Press, 1999. In the latter paper several modifications of the algorithm have been represented.

Several SOMs for different variables can be built and reorganised using the methods above. The covariance matrixes of first level SOMs can be combined so that a new data matrix is obtained, which has a row for each cell. The row is a concatenated vector of correlations of used variables. The length of each row is number of used variables times the number of cells.

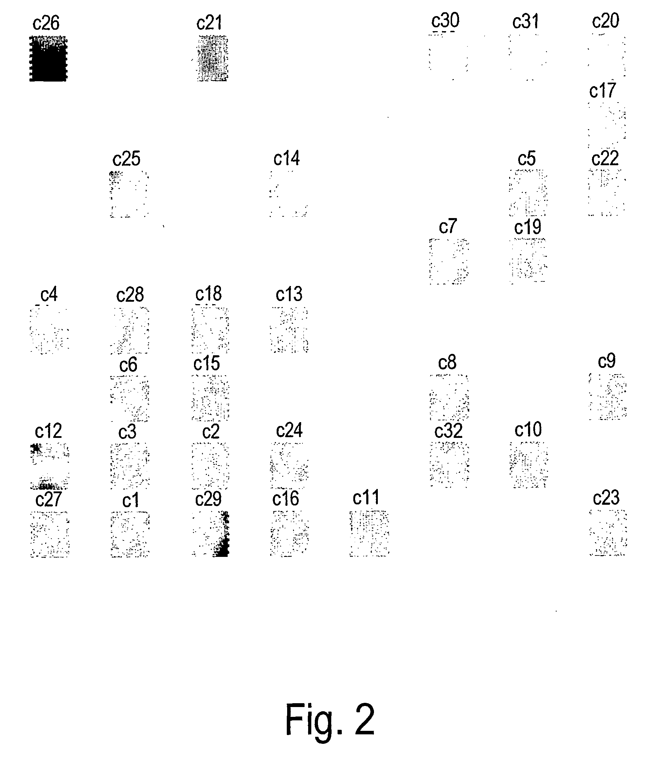

An example is shown in Fig. 2 which illustrates an analysis result of multiple cells. In particular, Fig. 2 shows reorganised frame error rate planes of a 32 cell mobile network. The FER planes are reorganised using FER and uplink noise raise plane covariances.

When an SOM is trained using this new data, clusters of cells can be found on the basis of correlations of a selected set of variables. Clusters can be found using the same methods as described above.

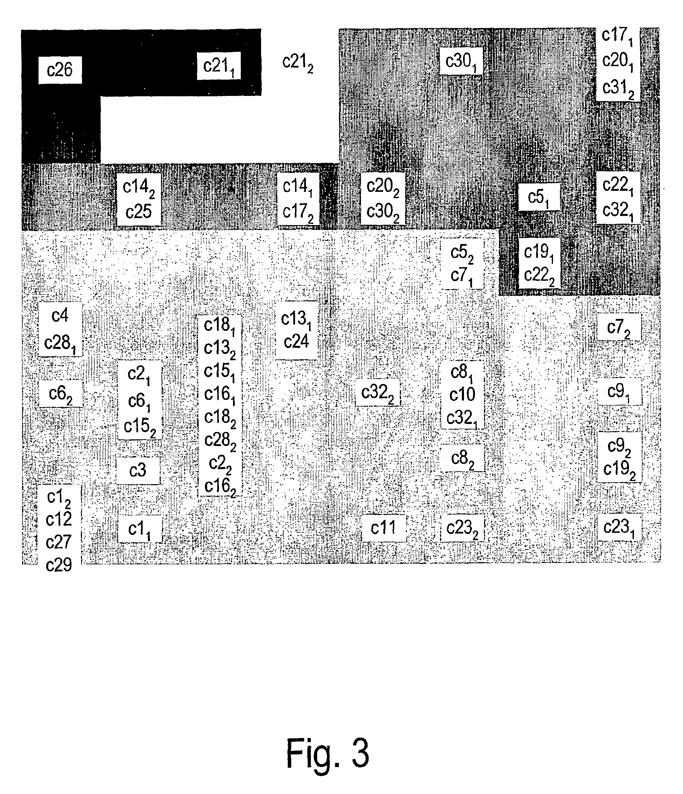

The above method classifies cells on the basis of correlations of selected variables. A model of mobile network, which describes the relations between cells, is built. Clusters or groups of similar cells are found. The clusters of cells with BMUs of original data (subscript 1) and new data set (subscript 2) is shown in Fig. 3. The original data are indicated with subscript 1, whereas the BMUs of the new data set are indicated with subscript 2. In the example of Fig. 3, four different clusters are illustrated which are represented by different grey scales (each representing different colours).

Thus, original and new data can easily be compared to each other. For example, the new data (indicated by subscript 2) were generated since in a new configuration the pilot power of cells c21 and c26 have been reduced from 1 W to 0.5 W. In this example, this amendment leads to the fact that cell c21 is now in another cluster.

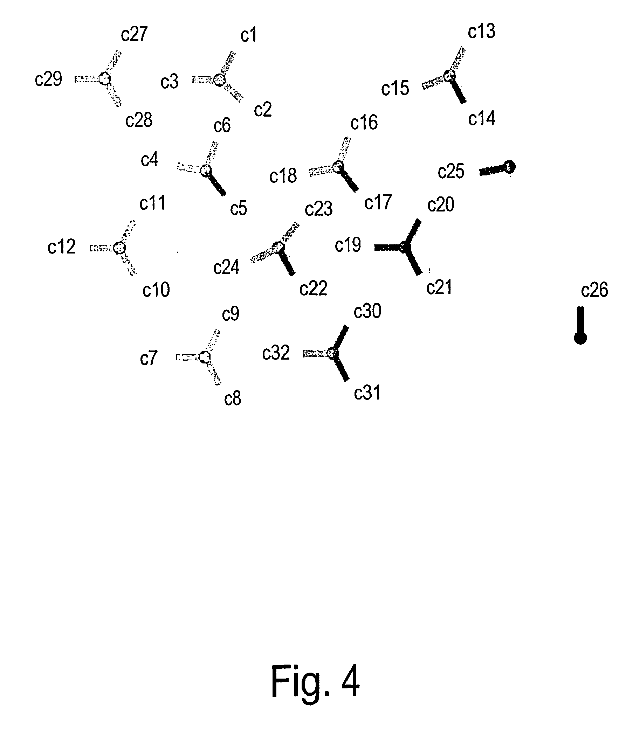

Fig. 4 shows the clustering information on the physical map, i.e., the clustering information of original data with spatial data. The colour (i.e., different grey scale) indicates which cells belong to the same group (i.e., which cell could utilise similar configuration parameter sets for example). In particular, the cells c21 and c26 belong to a first cluster (dark grey representing the colour blue), the cells c5, c14, c17, c19, c20, c22, c30 and c31 belong a second group (middle grey representing the colour red), and the remaining cells C1, c2, c3, c4, c7, c8, c9, c10, c11, c12, c13, cl5, c16 c18, c23, c24, c27, c28, c29 and c32 belong to a third group (light grey representing the colour green). Here, the same associations are given as in Fig. 3 with respect to the original data (i.e., cells indicated with subscript 1). It is noted that no cells belong to the fourth group (which is represented in Fig. 3 by white, representing the colour yellow).

In the following, an example for reconfiguring of placement of the cells in the SOM is given.

When some parameter of a group of cells like a pilot power is tuned, a new set of data is obtained. The placement of the reconfigured (and other) cells with respect to other cells can be found by training the SOM again so that the component planes will also be built from the new data of the cells of interest.

However, the new data is masked out on the BMU search of SOM training. From the component plane representation, the correlation vector with respect to the old data can be computed, and BMUs of the cells can be found. Thus, an old and a new placement of cells is obtained due to tuning of parameters of some cells.

According to the second embodiment, the planes are ordered using covariances between planes, but depending on what king of order of planes is wanted, it is possible to use also other preprocessing methods like taking the absolute value of covariances, or processing the planes of U-matrix, i.e. the differences between neighbouring nodes of first level SOM on each plane. Thus, the planes or the covariance matrix of planes of U-matrix are the inputs of second level SOM.

According to the first and the second embodiments, two ways to monitor the state of mobile network are possible. According to the first embodiment, a lower level SOM which represents general cell model is built. Histograms of the states of the cells are built using clusters of lower level SOM. The same clusters can be used later to find out histograms of a new data of some cell. Thus the operational mode of each cell and the whole network can be monitored.

According to the second embodiment, lower level SOMs of one variable are built at first. Covariance matrix of the component planes of these SOMs is used to train another map, which reorganises the cells. The SOMs have to be trained again to monitor the effect of a tuning of network parameters.

In the first embodiment, the data which is used to build the lower level SOM should be selected carefully so that it represents well all the possible states of the cells. Also, in the second embodiment the training data should cover the whole scale of data to be monitored. If it does not and samples out of scale appear, it would be better to select new training samples and train the SOM again.

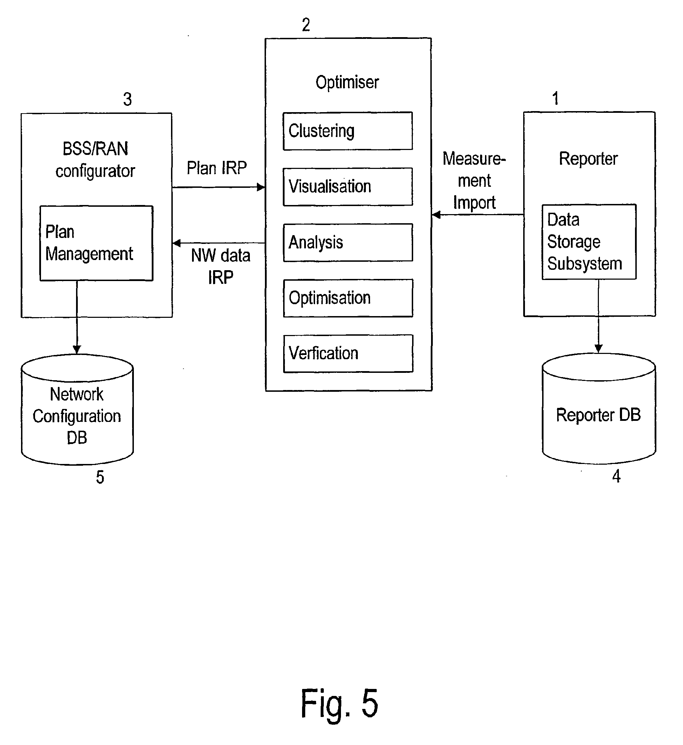

Next, a network optimisation system using the procedures according to the first and/or second embodiments is described with respect to Fig. 5 as a third embodiment of the invention.

The system comprises a reporter 1 where the data collection takes place. That is, the reporter is connected to network elements such as base stations, and collects data from there. The reporter denoted with reference numeral 2 accesses a reporter database 4 and forwards the collected data to an optimiser part 2.

The optimiser part 2 actually performs the clustering, visualisation, analysis of data, optimisation and verification, i.e., the procedures as described above in connection with the first and second embodiments. The optimiser 2 forwards the results (Plan IRP (IPR = Integration Reference Point)) to a configuration part 3 of the system.

It is noted that an Integration Reference Point (IRP) is a collection of related integration interfaces, i.e., a connection point between one or more subsystems.

The configuration part (configurator) 3 comprises the actual network configuration information for managing the configuration data of the network. The configuration part is referred to as a BSS/RAN (Base Station System/Radio Access Network) configurator and controls planning and managing a network, and accesses a network configuration database 5. Moreover, the configurator 3 forwards network data (NW data IRP) to the optimiser 2.

Between the reporter and the optimiser on the one hand, and the optimiser and the BSS/RAN configurator on the other hand interfaces can be defined. These interfaces are open interfaces.

In the arrangement described above, clustering is performed in the optimiser part. However, alternatively the clustering can be performed in any other suitable network element, for example, in the reporter part or in a base station, a base station controller (BSC), a radio network controller (RNC) and others.

Preferably, the reporter and optimiser part of the system is located in a Network Management Subsystem (NMS) of the network.

The above-described embodiments may vary within the scope of the attached claims.

In particular, the clustering method is not limited to the SOM algorithm, and the clustering can be performed with several different clustering methods both neural and non-neural methods. For example, K-means, Ward clustering or the like may be used. Ward clustering is an agglomerative hierarchical clustering technique. Other methods of same class are centroid, single linkage, average linkage and complete linkage. At each step of agglomerative clustering method smaller units are added together to form larger groups or clusters. Another group of hierarchical clustering techniques are divisive methods, where groups are divided into smaller sets.

According to the above embodiments, the best matching unit (BMU) is determined based on Euclidian and Kullback-Leibler method. However, these methods are only examples, and any other distance measuring method may be used.

Moreover, the embodiments describe a cellular application, however, the embodiments can be applied to any telecommunication network. For example, in the same manner as described above also fixed switching centres of a fixed telecommunication network may be optimised. But also other network sections of any telecommunication networks may be optimised.

The SOM can be used based on either online or offline measurement data analysis.

The clustering can be based on any measurements from the network. In this example quality measurements have been used. Another very probable clustering reason is the traffic. In this case, cell groups are provided based on traffic profiles used in cells.

As derivable from the above description, SOM clustering provides endless possibilities to aid the optimisation process.

## Claims

1. A method for configuring a network, wherein the network comprises a plurality of network sections (Cl to C32), the method comprising
accessing (S2) data from network sections;
forming (S3) groups of network sections by using at least part of the accessed data as input data; and
adjusting (S4) parameters of all network sections in one group in common,
**characterized in that**
in the group forming (S3), a neural clustering method is used, and the groups of network sections are clusters formed by the neural clustering method.

2. The method according to claim 1, wherein the clustering method is a Self Organizing Map (SOM) algorithm.

3. The method according to claim 1, wherein the clustering method is a K-means algorithm.

4. The method according to claim 1, wherein a vector is defined having as element one or more data of a particular network section.

5. The method according to claim 4, further comprising
obtaining the state of a particular network section by determining the best-matching unit (BMU) of [data] vectors of the network section[s].

6. The method according to claim 5, further comprising obtaining a sequence of states and forming a histogram, wherein network sections having similar histograms are classified to same groups.

7. The method according to claim 1, wherein a vector is defined which comprises as elements a particular data of a plurality of network sections.

8. The method according to claim 7, further comprising providing a covariance matrix of a plurality of component planes of a plurality of vectors.

9. The method according to claim 1, wherein clusters are identified by using Unified distance matrix algorithm.

10. The method according to claim 1, wherein clusters are identified by using Davies-Bouldin index algorithm.

11. The method according to claim 4 or 7, wherein a best matching unit (BMU) is determined by using an Euclidian distance.

12. The method according to claim 4 or 7, wherein a best matching unit (BMU) is determined by using an Kullback-Leibler distance.

13. The method according to claim 1, wherein a network section is a single network element.

14. The method according to claim 1, wherein the network is a cellular network and the network sections are cells.

15. The method according to claim 1, wherein the network sections are grouped based on quality measurements.

16. The method according to claim 1, wherein the network sections are grouped based on traffic profiles in the network sections.

17. A network configuration device (2) which is adapted to configure a network comprising a plurality of network sections (Cl to C32) and which is adapted to have access to data in the network section, to form groups of network sections by using at least part of the accessed data as input data and to adjust parameters of all network sections in one group in common,
**characterized in that**
the configuration device (2) is adapted to form the groups of network sections according to a neural clustering method.

18. The configuration device according to claim 17, wherein the clustering method is a Self Organizing Map (SOM) algorithm.

19. The configuration device according to claim 17, wherein the clustering method is a K-means algorithm.

20. The configuration device according to claim 17 adapted to define a vector having as element one or more data of a particular network section.

21. The configuration device according to claim 20 adapted to obtain the state of a particular network section by determining the best-matching unit (BMU) of vectors of the network sections.

22. The configuration device according to claim 21 adapted to obtain a sequence of states and to form a histogram, wherein network sections having similar histograms are classified to same clusters.

23. The configuration device according to claim 17 adapted to define a vector which comprises as elements a particular data of a plurality of network sections.

24. The configuration device according to claim 23 adapted to provide a covariance matrix of a plurality of component planes of a plurality of vectors.

25. The configuration device according to claim 17 adapted to identify clusters by using the Unified distance matrix (U-matrix) algorithm.

26. The configuration device according to claim 17 adapted to identify clusters by using the Davies-Bouldin index algorithm.

27. The configuration device according to claim 20 or 23 adapted to determine a best matching unit (BMU) by using an Euclidian distance.

28. The configuration device according to claim 20 or 23 adapted to determine a best matching unit (BMU) by using a Kullback-Leibler distance.

29. The configuration device according to claim 17, wherein a network section is a single network element.

30. The configuration device according to claim 17, wherein the network is a cellular network and the network sections are cells.

31. The configuration device according to claim 17 adapted to group network sections based on quality measurements.

32. The configuration device according to claim 17 adapted to group network sections based on traffic profiles in the network sections.

33. A system comprising a configuration device according to claim 17, and further comprising a data collecting device (1) which is adapted to collect data from the network sections and to provide it to the configuration device (2).

34. A system comprising a configuration device according to claim 17, and further comprising
a network managing device (3) which is adapted to manage actual network configuration data.

## Patentansprüche

1. Verfahren zum Konfigurieren eines Netzwerks, wobei das Netzwerk eine Vielzahl von Netzwerkabschnitten (C1 bis C32) aufweist, und das Verfahren aufweist:
Zugreifen (S2) auf Daten von Netzwerkabschnitten;
Bilden (S3) von Gruppen von Netzwerkabschnitten unter Verwendung von zumindest einem Teil der zugegriffenen Daten als Eingabedaten; und
Einstellen (S4) von Parametern aller Netzwerkabschnitte in einer Gruppe gemeinsam,
**dadurch gekennzeichnet, dass**
beim Gruppenbilden (S3) ein neuronales Clusterverfahren verwendet wird und die Gruppen von Netzwerkabschnitten durch das neuronale Clusterverfahren gebildete Cluster sind.

2. Verfahren nach Anspruch 1, wobei das Clusterverfahren ein Selbstorganisierende Karte (SOM) Algorithmus ist.

3. Verfahren nach Anspruch 1, wobei das Clusterverfahren ein K-means Algorithmus ist.

4. Verfahren nach Anspruch 1, wobei ein Vektor **dadurch** definiert ist, dass er als Element ein oder mehrere Datenteile eines einzelnen Netzwerkabschnitts aufweist.

5. Verfahren nach Anspruch 4, das ferner aufweist:
Erhalten des Zustands eines einzelnen Netzwerkabschnitts durch Bestimmen der am besten passenden Einheit (BMU) von [Daten-] Vektoren des/der Netzwerkabschnitts/Netzwerkabschnitte.

6. Verfahren nach Anspruch 5, das ferner aufweist:
Erhalten einer Folge von Zuständen und Bilden eines Histogramms, wobei Netzwerkabschnitte mit ähnlichen Histogrammen in dieselben Gruppen eingeordnet werden.

7. Verfahren nach Anspruch 1, wobei ein Vektor definiert ist, der als Elemente einen einzelnen Datenteil einer Vielzahl von Netzwerkabschnitten aufweist.

8. Verfahren nach Anspruch 7, das ferner aufweist:
Bereitstellen einer Kovarianzmatrix einer Vielzahl von Komponentenebenen einer Vielzahl von Vektoren.

9. Verfahren nach Anspruch 1, wobei Cluster unter Verwendung eines Vereinheitlichten-Distanzmatrixalgorithmus identifiziert werden.

10. Verfahren nach Anspruch 1, wobei Cluster unter Verwenden eines Davies-Bouldin Indexalgorithmus identifiziert werden.

11. Verfahren nach Anspruch 4 oder 7, wobei eine am besten passende Einheit (BMU) unter Verwendung eines euklidischen Abstands bestimmt wird.

12. Verfahren nach Anspruch 4 oder 7, wobei eine am besten passende Einheit (BMU) unter Verwendung eines Kullback-Leibler Abstands bestimmt wird.

13. Verfahren nach Anspruch 1, wobei ein Netzwerkabschnitt ein einziges Netzwerkelement ist.

14. Verfahren nach Anspruch 1, wobei das Netzwerk ein zellulares Netzwerk ist und die Netzwerkabschnitte Zellen sind.

15. Verfahren nach Anspruch 1, wobei die Netzwerkabschnitte auf Grundlage von Qualitätsmessungen gruppiert werden.

16. Verfahren nach Anspruch 1, wobei die Netzwerkabschnitte basierend auf Verkehrsprofilen in den Netzwerkabschnitten gruppiert werden.

17. Netzwerkkonfigurationsvorrichtung (2), die angepasst ist, ein Netzwerk zu konfigurieren, das eine Vielzahl von Netzwerkabschnitten (C1 bis C32) aufweist und das angepasst ist, auf Daten von Netzwerkabschnitten zuzugreifen, Gruppen von Netzwerkabschnitten unter Verwendung von zumindest einem Teil der zugegriffenen Daten als Eingabedaten zu bilden und Parameter aller Netzwerkabschnitte in einer Gruppe gemeinsam einzustellen,
**dadurch gekennzeichnet, dass**
die Konfigurationsvorrichtung (2) angepasst ist, Gruppen von Netzwerkabschnitten gemäß einem neuronalen Clusterverfahren zu bilden.

18. Konfigurationsvorrichtung nach Anspruch 17, wobei das Clusterverfahren ein Selbstorganisierende Karte (SOM) Algorithmus ist.

19. Konfigurationsvorrichtung nach Anspruch 17, wobei das Clusterverfahren ein K-means Algorithmus ist.

20. Konfigurationsvorrichtung nach Anspruch 17, die angepasst ist, einen Vektor **dadurch** zu definieren, dass er als Element ein oder mehrere Datenteile eines einzelnen Netzwerkabschnitts aufweist.

21. Konfigurationsvorrichtung nach Anspruch 20, die angepasst ist, den Zustands eines einzelnen Netzwerkabschnitts durch Bestimmen der am besten passenden Einheit (BMU) von Vektoren der Netzwerkabschnitte zu erhalten.

22. Konfigurationsvorrichtung nach Anspruch 21, die angepasst ist, eine Folge von Zuständen zu erhalten und ein Histogramm zu bilden, wobei die Netzwerkabschnitte mit ähnlichen Histogrammen in dieselben Gruppen eingeordnet werden.

23. Konfigurationsvorrichtung nach Anspruch 17, die angepasst ist, einen Vektor zu definieren, der als Elemente einen einzelnen Datenteil einer Vielzahl von Netzwerkabschnitten aufweist.

24. Konfigurationsvorrichtung nach Anspruch 23, die angepasst ist, eine Kovarianzmatrix einer Vielzahl von Komponentenebenen einer Vielzahl von Vektoren bereitzustellen.

25. Konfigurationsvorrichtung nach Anspruch 17, die angepasst ist, Cluster unter Verwendung eines Vereinheitlichten Distanzmatrixalgorithmus zu identifizieren.

26. Konfigurationsvorrichtung nach Anspruch 17, die angepasst ist, Cluster unter Verwenden eines Davies-Bouldin Indexalgorithmus zu identifizieren.

27. Konfigurationsvorrichtung nach Anspruch 20 oder 23, die angepasst ist, eine am besten passende Einheit (BMU) unter Verwendung eines euklidischen Abstands zu bestimmen.

28. Konfigurationsvorrichtung nach Anspruch 20 oder 23, die angepasst ist, eine am besten passende Einheit (BMU) unter Verwendung eines Kullback-Leibler Abstands zu bestimmen.

29. Konfigurationsvorrichtung nach Anspruch 17, wobei ein Netzwerkabschnitt ein einziges Netzwerkelement ist.

30. Konfigurationsvorrichtung nach Anspruch 17, wobei das Netzwerk ein zellulares Netzwerk ist und die Netzwerkabschnitte Zellen sind.

31. Konfigurationsvorrichtung nach Anspruch 17, die angepasst ist, Netzwerkabschnitte auf Grundlage von Qualitätsmessungen zu gruppieren.

32. Konfigurationsvorrichtung nach Anspruch 17, die angepasst ist, Netzwerkabschnitte basierend auf Verkehrsprofilen in den Netzwerkabschnitten zu gruppieren.

33. System, das eine Konfigurationsvorrichtung nach Anspruch 17 aufweist, und ferner eine Datensammelvorrichtung (1) aufweist, die angepasst ist, Daten von den Netzwerkabschnitten zu sammeln und der Konfigurationsvorrichtung (2) bereitzustellen.

34. System, das eine Konfigurationsvorrichtung nach Anspruch 17 aufweist, und ferner eine Netzwerkverwaltungsvorrichtung (3) aufweist, die angepasst ist, Ist-Netzwerkkonfigurationsdaten zu verwalten.

## Revendications

1. Procédé de configuration d'un réseau, dans lequel le réseau comprend une pluralité de sections de réseau (C1 à C32), le procédé comprenant les étapes consistant à :
accéder (S2) à des données de sections de réseau ;
former (S3) des groupes de sections de réseau en utilisant au moins une partie des données accédées en tant que données d'entrée ; et
ajuster (S4) des paramètres de toutes les sections de réseau dans un groupe en commun,
**caractérisé en ce que**
à l'étape consistant à former des groupes (S3), une méthode de groupement neuronal est utilisée, et les groupes de sections de réseau sont des grappes formées par la méthode de groupement neuronal.

2. Procédé selon la revendication 1, dans lequel la méthode de groupement est un algorithme de carte auto-organisatrice (SOM - Self Organizing Map).

3. Procédé selon la revendication 1, dans lequel la méthode de groupement est un algorithme K-means.

4. Procédé selon la revendication 1, dans lequel il est défini un vecteur ayant comme élément une ou plusieurs données d'une section de réseau particulière.

5. Procédé selon la revendication 4, comprenant en outre l'étape consistant à :
obtenir l'état d'une section de réseau particulière en déterminant l'unité de meilleure correspondance (BMU - Best-Matching Unit) des vecteurs [de données] de la ou des sections de réseau.

6. Procédé selon la revendication 5, comprenant en outre l'étape consistant à obtenir une séquence d'états et l'étape consistant à former un histogramme, dans lequel les sections de réseau ayant des histogrammes similaires sont classées dans les mêmes groupes.

7. Procédé selon la revendication 1, dans lequel il est défini un vecteur qui comprend comme éléments des données particulières d'une pluralité de sections de réseau.

8. Procédé selon la revendication 7, comprenant en outre l'étape consistant à fournir une matrice de covariance d'une pluralité de plans de composants d'une pluralité de vecteurs.

9. Procédé selon la revendication 1, dans lequel des grappes sont identifiées en utilisant l'algorithme de matrice de distance unifiée.

10. Procédé selon la revendication 1, dans lequel des grappes sont identifiées en utilisant l'algorithme d'index de Davies-Bouldin.

11. Procédé selon la revendication 4 ou 7, dans lequel une unité de meilleure correspondance (BMU) est déterminée en utilisant une distance euclidienne.

12. Procédé selon la revendication 4 ou 7, dans lequel une unité de meilleure correspondance (BMU) est déterminée en utilisant une distance de Kullback-Leibler.

13. Procédé selon la revendication 1, dans lequel une section de réseau est un élément de réseau unique.

14. Procédé selon la revendication 1, dans lequel le réseau est un réseau cellulaire et les sections de réseau sont des cellules.

15. Procédé selon la revendication 1, dans lequel les sections de réseau sont groupées sur la base de mesures de qualité.

16. Procédé selon la revendication 1, dans lequel les sections de réseau sont groupées sur la base de profils de trafic dans les sections de réseau.

17. Dispositif de configuration de réseau (2) qui est apte à configurer un réseau comprenant une pluralité de sections de réseau (C1 à C32) et qui est apte à accéder à des données dans la section de réseau, à former des groupes de sections de réseau en utilisant au moins une partie des données accédées en tant que données d'entrée et à ajuster des paramètres de toutes les sections de réseau dans un groupe en commun,
**caractérisé en ce que**
le dispositif de configuration (2) est apte à former les groupes de sections de réseau selon une méthode de groupement neuronal.

18. Dispositif de configuration selon la revendication 17, dans lequel la méthode de groupement est un algorithme de carte auto-organisatrice (SOM - Self Organizing Map).

19. Dispositif de configuration selon la revendication 17, dans lequel la méthode de groupement est un algorithme K-means.

20. Dispositif de configuration selon la revendication 17, apte à définir un vecteur ayant comme élément une ou plusieurs données d'une section de réseau particulière.

21. Dispositif de configuration selon la revendication 20, apte à obtenir l'état d'une section de réseau particulière en déterminant l'unité de meilleure correspondance (BMU) des vecteurs des sections de réseau.

22. Dispositif de configuration selon la revendication 21, apte à obtenir une séquence d'états et à former un histogramme, dans lequel les sections de réseau ayant des histogrammes similaires sont classées dans les mêmes grappes.

23. Dispositif de configuration selon la revendication 17, apte à définir un vecteur qui comprend comme éléments des données particulières d'une pluralité de sections de réseau.

24. Dispositif de configuration selon la revendication 23, apte à fournir une matrice de covariance d'une pluralité de plans de composants d'une pluralité de vecteurs.

25. Dispositif de configuration selon la revendication 17, apte à identifier des grappes en utilisant l'algorithme de matrice de distance unifiée (U-matrix).

26. Dispositif de configuration selon la revendication 17, apte à identifier des grappes en utilisant l'algorithme d'index de Davies-Bouldin.

27. Dispositif de configuration selon la revendication 20 ou 23, apte à déterminer une unité de meilleure correspondance (BMU) en utilisant une distance euclidienne.

28. Dispositif de configuration selon la revendication 20 ou 23, apte à déterminer une unité de meilleure correspondance (BMU) en utilisant une distance de Kullback-Leibler.

29. Dispositif de configuration selon la revendication 17, dans lequel une section de réseau est un élément de réseau unique.

30. Dispositif de configuration selon la revendication 17, dans lequel le réseau est un réseau cellulaire et les sections de réseau sont des cellules.

31. Dispositif de configuration selon la revendication 17, apte à grouper des sections de réseau sur la base de mesures de qualité.

32. Dispositif de configuration selon la revendication 17, apte à grouper des sections de réseau sur la base de profils de trafic dans les sections de réseau.

33. Système comprenant un dispositif de configuration selon la revendication 17, et comprenant en outre un dispositif de collecte de données (1) qui est apte à collecter des données des sections de réseau et à les fournir au dispositif de configuration (2).

34. Système comprenant un dispositif de configuration selon la revendication 17, et comprenant en outre un dispositif de gestion de réseau (3) qui est apte à gérer des données de configuration de réseau réel.
